# EUROPEAN PATENT SPECIFICATION

(11) **EP 3 265 289 B1**
(45) Date of publication and mention of the grant of the patent: **08.05.2019**
(21) Application number: 16723507.6
(22) Date of filing: 01.03.2016
(51) Int. Cl.: B29C 47/90, B29C 47/92, B29C 47/00

(54) **CALIBRATION CAGE FOR THE PRODUCTION OF BLOWN FILMS**
KALIBRIERKORB ZUR HERSTELLUNG VON BLASFOLIEN
CAGE D'ÉTALONNAGE POUR LA PRODUCTION DE FILMS SOUFFLÉS

(30) Priority: 02.03.2015 IT MI20150306
(43) Date of publication of application: 10.01.2018
(73) Proprietor: Syncro S.r.l., 21052 Busto Arsizio (VA) (IT)
(72) Inventor: CACCIA, Gabriele, 21052 Busto Arsizio (VA) (IT); RIZZOTTI, Paolo, 28100 Novara (NO) (IT); NAPPA, Enrico, 21056 Induno Olona (VA) (IT)
(74) Representative: Concone, Emanuele
(86) International application number: PCT/IB2016/051120
(87) International publication number: WO 2016/139573

(56) References cited:
- EP-A2- 1 967 350
- WO-A1-2007/079899
- GB-A- 1 446 518
- US-A- 3 980 418

## Description

The present invention relates to plants for the production of blown films, i.e. plastic films extruded in the form of a tube, and in particular to a calibration cage for guiding the extruded tube and controlling its diameter.

It is known that, in this type of plant a plastic mass is extruded through a die of annular/toroidal shape with a vertical axis so as to take a tubular shape and is pulled vertically by an overlying calender. Before the tubular film is completely cooled down, it is possible to adjust its diameter by blowing compressed air inside the tube, and a calibration cage is arranged between the die and the calender to maintain constant the set diameter.

Inside said calibration cage or calibrator, the tubular film is guided by suitable guide elements which can be rolling (typically rollers with horizontal axis) or static, i.e. made of a slippery material for a sliding contact with the film or provided with porous surfaces crossed by a gaseous flow which forms an air cushion for a contactless guiding. In the following, specific reference will be made to guide elements consisting of rollers, but it is clear that what is said also applies to guide elements of the static type or of other type.

The goal of the calibration cage is to externally position the rollers in a precise manner on the tubular film thus establishing a containment of the tube in a shape and position that is correct and reliable. It is therefore necessary that the cage makes a suitable adjustment of the position of the rollers in the radial direction to accommodate for the change in diameter of the tube in the different film formats that a production line is able to produce. For this purpose, the rollers are mounted vertically aligned on respective vertical rods arranged at regular intervals around the tubular film, the rollers of adjacent rods being usually staggered alternately in the axial direction, i.e. a first group of rollers alternates in a circumferential direction with a second group of rollers placed higher or lower. Note that the radial and axial directions are defined with reference to the axis of the cylindrical body constituting the tubular film in the portion between the die and the calender.

With this configuration, the rollers can control the shape and size of the tubular film along its perimeter and in correspondence of multiple horizontal planes, both when the cage is adjusted to the maximum diameter and to the minimum diameter. In fact, thanks to the axial staggering, the rollers of a rod do not interfere with those of the adjacent rods when at the minimum diameter there is overlapping in the horizontal plane between the rollers of adjacent rods.

Furthermore, at the end of the radial positioning of the rollers they should be oriented so as to obtain a tangential contact with the tube, i.e. the perpendicular to the point of contact with the tube must be placed exactly along a radial direction towards the axis of the tube.

Prior art calibrators carry out such a positioning essentially in two ways, namely by moving the rollers in a radial direction by means of a linearly extendable cantilever support (e.g. GB 1446518 A) or via a rotating cantilever support pivoted on the structure of the calibrator. In both cases, there are mechanical or electrical/electronic mechanisms for a synchronized radial movement of the rollers so that they remain always arranged along a circle concentric to the tubular film.

In the first type of calibrator the rods which carry the rollers are thus mounted at the end of a telescopic rod, a pantograph or the like that moves directly in the radial direction as shown, for example, in the SCC model of Addex Inc. of Stoughton (Massachusetts , USA). A similar solution allows a high accuracy of orientation of the rollers but presents problems of encumbrance and complexity that make it heavy and expensive. Moreover it is difficult to access the space above the die for maintenance operations and/or startup of the extrusion process.

In the second type of calibrator each rod is pivoted on the end of a vertical frame rotatable in the horizontal plane about a vertical axis arranged along the perimeter of the calibrator structure. However, such a solution requires a mechanism for orienting the rollers so as to maintain a tangential contact, since the rotation of the frame causes not only a radial displacement of the rod but also a rotation thereof. Accordingly, the mechanism must provide to compensate for the rotation of the frame which carries the rod, such that the latter moves parallel to itself while maintaining the rollers in tangential contact with the tubular film.

A first solution described in US 3980418 and in EP 1967350 provides as compensation mechanism a horizontal articulated quadrilateral in which two long sides are constituted by an arm of the frame and a secondary arm almost parallel thereto, while two short sides are respectively constituted by a crank integral with the roller-carrying rod and on which are pivoted the inner ends of said arms as well as by the distance along the perimeter of the calibrator between the pivot points of the outer ends of the two arms. A similar solution is simple and reliable but has inherent accuracy limitations since the articulated quadrilateral is able to dispose tangentially the rollers only at three predetermined radial distances, while in the rest of the cage stroke it must operate by approximation.

In fact, upon fixing the external pivot point and the length of the frame arm as well as the length of the crank, the latter is radially disposed in correspondence of the minimum, mean and maximum diameters of the tubular film so as to define three respective inner pivot points of the secondary arm. These three points define a circle whose radius defines the length of the secondary arm and whose center defines the outer pivot point of said arm, and consequently also the distance to the outer pivot point of the frame arm. This geometry is clearly illustrated in Fig.5 of the above mentioned prior art document EP 1967350.

For any value between the minimum and the mean diameters and between the mean and the maximum diameters the quadrilateral is therefore unable to dispose the rollers exactly along the tangential direction and can arrive at best to an error of about ±1°. Therefore the point of contact between the rollers and the tubular film moves along an arc of about 2° centered in the vertical midplane of the rollers. To reduce this error the device described in EP 1967350 also provides an adjustment system for the length of the secondary arm which, however, makes the mechanism even more complex and delicate and makes slower the adjustment of the position of the rollers. Furthermore this system requires the simultaneous adjustment of all the secondary arms and is also less reliable, since it is sufficient that a jamming occurs in one of the secondary arms to alter the adjustment of the entire compensation mechanism.

To overcome this problem US 8210837 provides as compensation mechanism a coupling between adjacent roller-carrying rods by means of sliding bearings and horizontal tie bars, which respectively constitute the vertices and sides of a regular polygon having a number *n* of sides equal to the number of said roller-carrying rods. More specifically, each tie bar is connected rigidly to a rod so as to extend symmetrically with respect to it, and each sliding bearing has two seats through which pass the bars of two adjacent roller-carrying rods. It is clear that the tie bars must remain engaged in the sliding bearings also in correspondence of the maximum diameter position of the tubular film, and that the two seats of each bearing are axially offset and form an angle equal to the internal angle of said regular polygon.

This second type of compensation mechanism solves the problems of accuracy of the above solution with fixed sides articulated quadrilateral described in US 3980418, in that the roller-carrying rods retain the tangential position being restrained to the regular polygon that retains its shape upon variation of the diameter. However, this second solution is more complex, expensive and bulky compared to the articulated quadrilateral mechanism and is also less rigid and therefore more sensitive to the vibrations produced by the oscillations of the tubular film. Furthermore it should be noted that it is also less reliable, since it is sufficient that a jamming occurs in one of the *2n* seats of the sliding bearings to cause blockage or malfunctioning of the entire compensation mechanism.

Another problematic aspect of known calibrators resides in the mechanism for the axial movement of the structure, which is useful for adjusting the vertical distance of the calibrator from the die so as to prevent any damage to the freshly extruded film that is still hot. Said axial adjustment mechanism comprises lifting and lowering devices that typically consist of screws and female screws with trapezoid section thread. The types of commonly used devices are rotating screws engaged in stationary female screws connected to the structure of the calibrator or to plates connected thereto, or vice versa rotating female screws (generally internal to jacks) arranged on the calibrator structure or on plates connected thereto and engaged on stationary screws.

The screws can be secured to an additional frame placed outside the calibrator structure or fixed directly at their top to the calender support structure. Moreover, the movement guide elements of the calibrator structure can be the screws themselves or the mechanism may provide guide elements such as sliding pipes or profiles parallel to the screws.

Note that the axial position adjusting mechanism must ensure not only the guiding and the positioning of the calibration cage but must also be sufficiently rigid to prevent oscillations generated by the tubular film sliding therein from affecting the calibration function itself.

This is particularly difficult in the case of rotating screws cantilever fixed beneath the calender support, since the adjustment stroke usually is at least 100 cm whereby the screws are very long and subject to bending. Furthermore, the point of connection of the screws to the calender support is quite far from the point of application of the transverse forces exerted by the tubular film on the rollers of the cage, therefore a certain oscillation is inevitable.

In the solutions with the external frame the screws are not cantilever mounted and therefore are more stable, but the presence of the frame makes the mechanism much bulkier, heavier and more expensive. Moreover also in this case the cage structure is secured to the female screws only in correspondence of its top, whereby there remains the problem of oscillations due to the distance between the connection with the female screws and the point of application of the transverse forces exerted by the tubular film.

The object of the present invention is therefore to provide a calibration cage which is free from the drawbacks described above. Said object is achieved with a cage of the second type described above in which each roller-carrying rod is connected to at least another adjacent roller-carrying rod through at least one connection element that is rigid in the horizontal plane yet has a length variable in said plane through the relative motion of at least two parts thereof, said at least one connection element being pivoted between said adjacent vertical rods through two horizontal pivots each of which has an axis of rotation forming with the vertical radial plane comprising the axis of rotation of the respective roller-carrying rod an angle that is equal to half of the internal angle of a regular polygon having a number of sides equal to the number of roller-carrying rods.

In a preferred embodiment thereof, the present cage also comprises an axial adjustment mechanism that is constituted by one or more movement units fixed to the cage structure both at its bottom and at its top, each unit comprising a rotating female screw engaged on a stationary screw as well as a pair of guides on which at least one pair of sliders is engaged. Further advantageous characteristics of the device are specified in the dependent claims.

The main advantage of this calibrator is to obtain accuracy characteristics similar to the solutions with radial movement of the roller-carrying rods without, however, having bulkiness problems and with a structure that is simpler, more reliable and less expensive.

A second advantage of this calibrator, in its preferred embodiment, is that of using its own supporting structure as high rigidity element for a precise and effective operation of the axial position adjustment mechanism without the problems of weight, cost and bulkiness of an external frame.

Another advantage of said calibrator derives from the fact that it is realized with conventional, simple and inexpensive components and that it can also be installed on existing systems as an after-market upgrade.

Further advantages and characteristics of the calibrator according to the present invention will become apparent to those skilled in the art from the following detailed and non-limiting description of some embodiments thereof with reference to the accompanying drawings in which:
Fig.1 is a top perspective view, with an enlarged detail, of a first embodiment of the cage, which is adjusted to the maximum diameter of the tubular film;
Fig.2 is a view similar to the preceding one of a second embodiment which is different in the type of connection element;
Fig.3 is a view similar to the preceding one of a cage according to the first embodiment of Fig.1 but in a configuration with a greater number of roller-carrying rods;
Fig.4 is a side view of the cage of Fig.3;
Fig.5 is a top plan view of the cage of Fig.3;
Fig.6 is a view similar to the preceding one with the cage adjusted to an intermediate diameter of the tubular film;
Fig.7 is a view similar to the preceding one with the cage adjusted to the minimum diameter of the tubular film;
Fig.8 is a top perspective view of a movement unit of the axial adjustment mechanism;
Fig.9 is a view similar to Fig.3, further comprising an axial adjustment mechanism formed by two opposed movement units; and
Fig.10 is a view similar to the preceding one, further comprising an additional external frame that connects the two movement units.

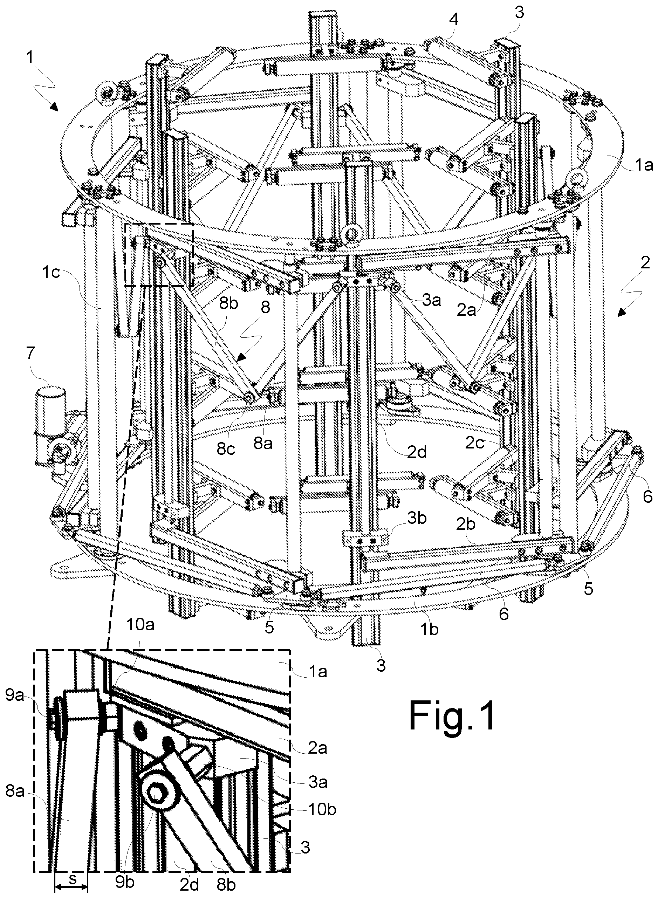

Referring to Fig.1, there is seen that a calibration cage according to the present invention conventionally comprises a supporting structure 1 and a plurality of rotatable rectangular frames 2 which are cantilever pivoted along the perimeter of structure 1 at regular intervals, i.e. in correspondence with the vertices of a regular polygon (an hexagon in this case). At the free end of each of frames 2 there is pivoted a vertical rod 3 which carries a plurality of horizontal rollers 4 (five in the example shown) mounted vertically aligned and equally spaced, the rollers 4 of adjacent rods 3 being alternately staggered in the axial direction as mentioned earlier.

More specifically, structure 1 essentially consists of an upper ring 1a and a lower ring 1b, of circular shape in the example shown in Fig.1, connected by a plurality of uprights 1c. Similarly, each frame 2 essentially consists of an upper arm 2a and a lower arm 2b connected close to the outer end by a first upright 2c pivoted between rings 1a, 1b while a second upright 2d is pivoted between the inner ends of arms 2a, 2b and carries rod 3.

In particular, rod 3 is provided with a pair of substantially rectangular mounting brackets to make it integral with the second upright 2d, namely an upper bracket 3a and a lower bracket 3b respectively close to arms 2a and 2b. Note that the axis of rotation of upright 2d is included in the common vertical midplane of rollers 4 which also includes the points of contact with the tubular film.

The cage also includes a mechanical mechanism for synchronizing the rotation of frames 2, and therefore the radial movement of rollers 4, which is quite similar to the mechanism described in US 3980418. In brief, a horizontal crank 5 is integral with each frame 2 and is connected to the adjacent cranks 5 through connecting rods 6 pivoted between them. Therefore a single actuator 7 is sufficient to rotate one of cranks 5, which transmits the motion to the other cranks 5 via the connecting rods 6.

A first novel aspect of the calibration cage according to the present invention lies in the presence of connection elements 8 pivoted between two adjacent rods 3 by means of horizontal pivots, each connection element 8 being rigid in the horizontal plane yet of variable length in said plane through the relative motion of at least two parts thereof. In this context, the expression "rigid in the horizontal plane" means that a connection element 8 has a resistance to bending with respect to a torque with a vertical axis.

More specifically, the connection elements 8 are pivoted in correspondence of the upper mounting brackets 3a, each of which is provided in the outer corners of horizontal pivots 9a, 9b arranged symmetrically with respect to the axis of rotation of the second upright 2d. The axes of rotation of pivots 9a, 9b converge towards the center of the cage forming an angle α equal to the internal angle of a regular polygon having a number n of sides equal to the number of frames 2 (i.e. α = 60° in the illustrated example with six frames 2). In other words, the axis of each pivot 9a, 9b forms an angle α/2 with the radial vertical plane comprising the axis of rotation of the respective upright 2d on which rod 3 is fixed.

In this way, when rods 3 are oriented correctly so that rollers 4 are in tangential contact with the film, the bisector of said angle α formed by the axes of pivots 9a, 9b is comprised in said radial vertical plane. Consequently, in this condition the pivot 9a of each bracket 3a is parallel to the pivot 9b of the adjacent bracket 3a to which it is connected through the connection element 8.

Therefore, when frames 2 are rotated to adjust the calibration diameter of the cage the connection elements 8, which are rigid in the horizontal plane, maintain pivots 9a, 9b connected by them parallel and therefore maintain rollers 4 correctly oriented. The change of distance between pivots 9a, 9b caused by the rotation of frames 2 is compensated by the connection elements 8 through a relative motion between at least two parts that make up each element 8.

In the first embodiment of the cage illustrated in Fig.1 a connection element 8 consists of an articulated rod formed by a first part 8a and a second part 8b connected via a horizontal pivot 8c, so that element 8 has a V-shape in the vertical plane that can become narrower or wider. For simplicity of construction, the two parts 8a, 8b are preferably identical and preferably have a square cross-section, but they may have any other suitable shape and even be of different length.

Since the first part 8a is at a radially more internal position with respect to the second part 8b, due to the overlapping of the two parts in correspondence with pivot 8c, pivot 9b used for fixing the external part 8b to bracket 3a is preferably longer than pivot 9a used for fixing the internal part 8a by a length equal to the thickness s of the internal part 8a, and the same applies to the relevant spacer 10b located between the external part 8b and bracket 3a which is longer than the corresponding spacer 10a. In this way you get a smoother operation without bending stresses on pivots 8c, 9a, 9b and without having to give an S-shape to one of the ends of the two parts 8a, 8b to compensate for the different radial distance, thus obtaining always interchangeable parts but more complex.

Note that if the thickness of the parts 8a, 8b is sufficient to obtain a mutual fork connection that is robust enough, there is no difference in radial distance and therefore there is no need to have pivots 9a, 9b and spacers 10a, 10b of different lengths but the two parts 8a, 8b in this case are different and not interchangeable.

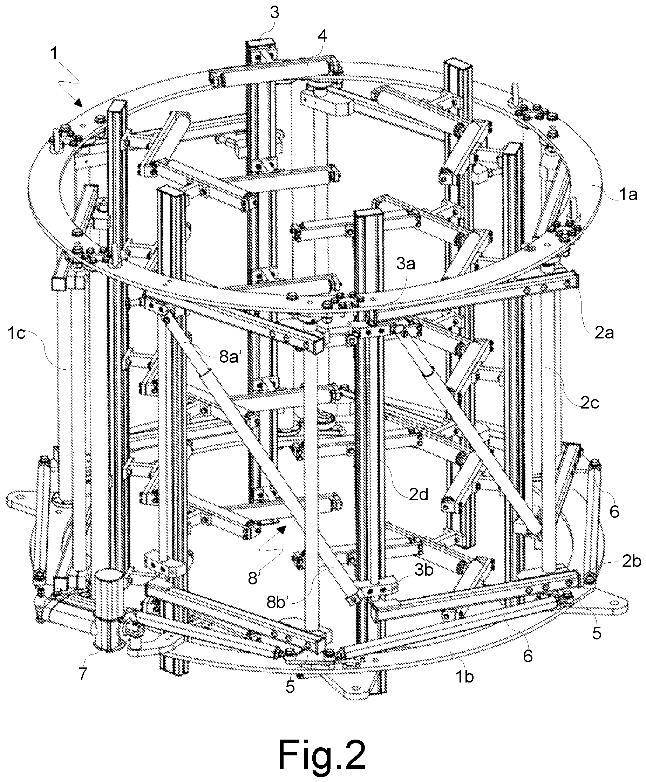

In the second embodiment illustrated in Fig.2, where the same reference numerals indicate the same components, the only difference lies in the connection elements 8' between rods 3. In this case each element 8' consists of a telescopic rod with two parts 8a', 8b' inserted one inside the other, instead of the two hinged parts 8a, 8b of the articulated rod 8. More specifically, the inner part 8a' is pivoted on the upper bracket 3a of a rod 3 and the outer part 8b' is pivoted on the lower bracket 3b of an adjacent rod 3, so that the connection element 8' is arranged diagonally.

Note that the arrangement of the connection elements 8, 8' in figures 1 and 2 is to be understood as merely illustrative since these elements could be arranged in various other configurations obvious for a person skilled in the art. In other non-illustrated embodiments, for example, the elements 8' could be pivoted along the other diagonal, i.e. with part 8a' on bracket 3b and part 8b' on bracket 3a, or arranged horizontally between brackets 3a or 3b and in this case elements 8 could be formed by three or more parts to cover the whole of the cage adjustment stroke.

Similarly, elements 8 could be diagonally arranged as elements 8' or pivoted between brackets 3b, and the same brackets 3a and/or 3b could be positioned at different heights on frames 2, for example for reasons of access at selected points of the cage. In practice, an embodiment may include any combination of connection elements 8, 8' and/or of their configurations and/or of their positions, and a pair of rods 3 could be connected even by two or more connection elements 8, 8'.

Furthermore, the above described compensation mechanism could also operate by connecting rods 3 only in pairs rather than all in sequence, thus dispensing with half of the connection elements 8, 8' and of the horizontal pivots 9a, 9b. In fact, a rod 3 remains correctly orientated even if it is connected via a single pivot 9a or 9b to only one of the two rods 3 adjacent thereto. The fact of connecting a rod 3 to both the adjacent rods serves only to provide a greater operating precision and symmetry to account for any vertical play in pivots 8c, 9a, 9b or for small deformations of the components.

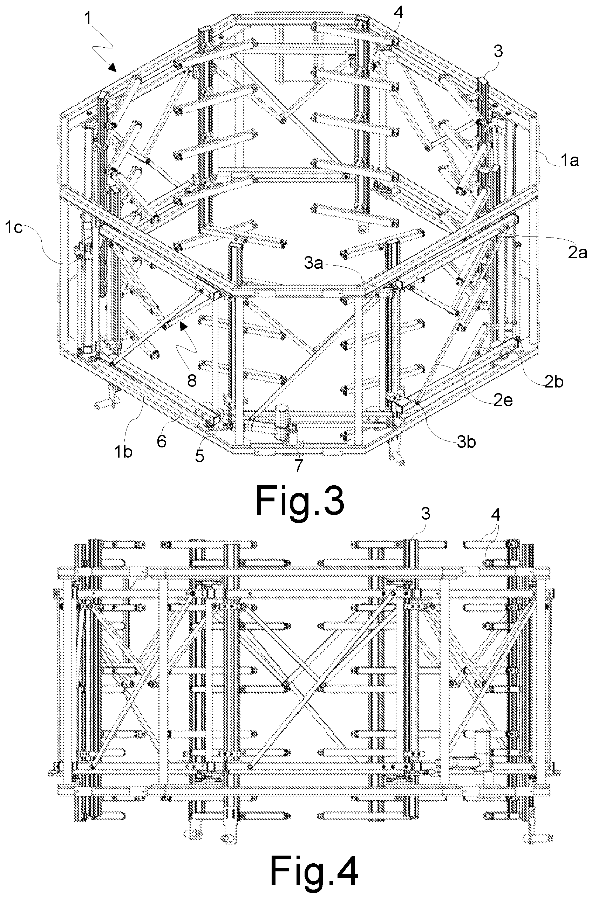

The simple and effective operation of the calibration cage according to the present invention is now illustrated with reference also to figures 3 to 7 which show a cage similar to that of Fig.1 but with eight frames 2. In this case rings 1a, 1b do not have a circular shape but an octagonal shape with alternating sides of two different lengths, with frames 2 all pivoted on the long sides but always arranged at the vertices of a regular octagon. Furthermore each frame 2, being larger, is also strengthened by a diagonal strut attached between arms 2a and 2b, but for the rest the structure and the configuration of the cage are those described above.

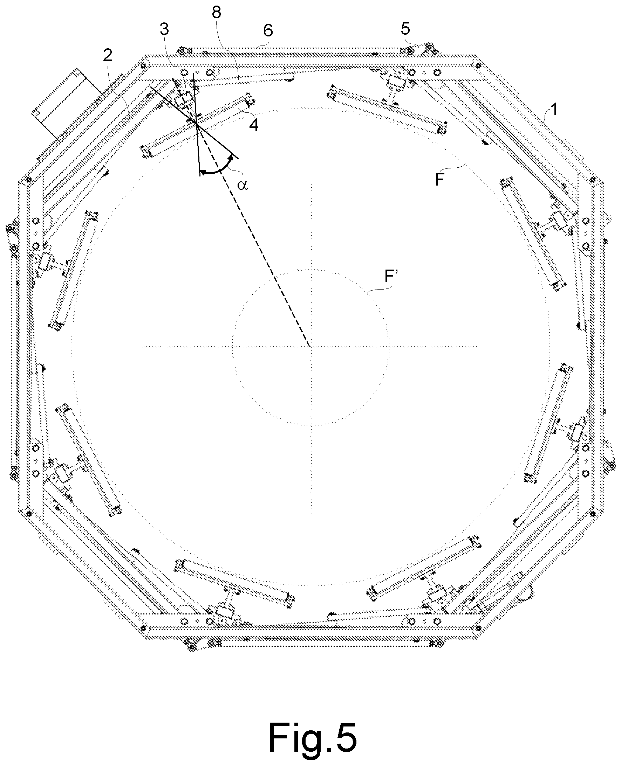

In figures 3 to 5 the cage is illustrated in the position of maximum opening corresponding to the maximum diameter F of the tubular film, with frames 2 substantially parallel to the sides of the octagonal structure 1 and with the connection elements 8 in the V-shaped configuration of the maximum amplitude (wide V). In the plan view of Fig.5 there is also depicted the minimum diameter F' of the tubular film, to provide an indication of the adjustment stroke of the cage, as well as the angle α which in this case is 45°.

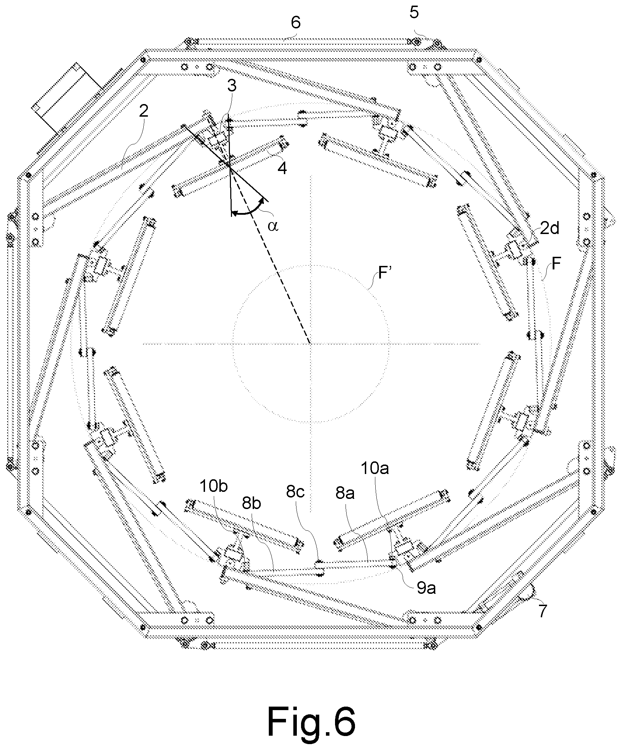

In the plan view of Fig.6 the cage is represented in an intermediate position reached by means of a synchronized rotation of about 15° of frames 2 in a clockwise direction, which has led uprights 2d to be arranged substantially along the maximum diameter F. This synchronized rotation is obtained, as explained above, by means of actuator 7 and the synchronization mechanism formed by cranks 5 connected through rods 6. This view clearly shows how rollers 4 are still correctly oriented due to the compensation function provided by the connection elements 8 that by maintaining pivots 9a, 9b parallel have caused a corresponding counterclockwise rotation of rods 3 with respect to frames 2, so as to compensate for the clockwise rotation of the frames.

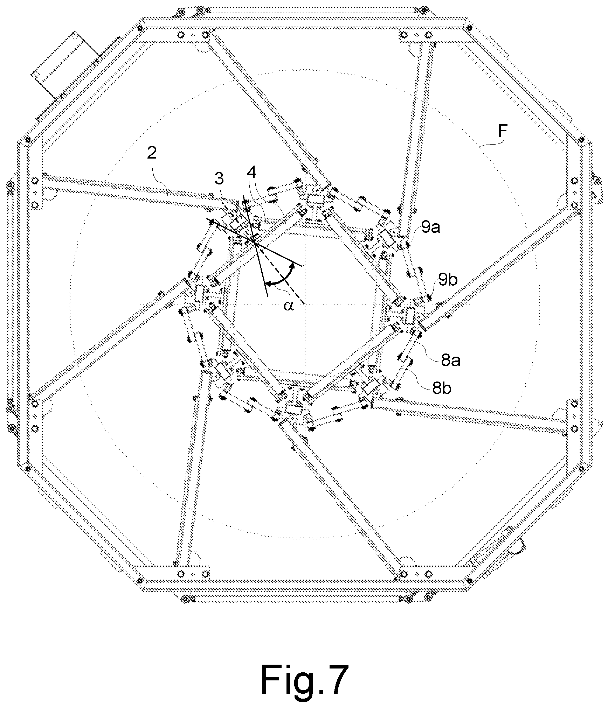

Finally, the plan view of Fig.7 shows the cage in the minimum opening position reached by means of a synchronized rotation of about 50° of frames 2 in a clockwise direction, which led rollers 4 to be arranged along the minimum diameter F'. In this position pivots 9a, 9b are at the minimum distance therefore the connection elements 8 are in the V-shaped configuration of the minimum amplitude (narrow V). This view clearly shows how the axially staggered rollers 4 are arranged on parallel planes to form squares alternately rotated by 45°, so that the contact with the film always takes place at the vertices of a regular octagon.

Obviously the radial adjustment movement of the cage in the opposite direction to switch from the minimum diameter F' to the maximum diameter F is obtained simply by reversing the direction of movement of actuator 7 and consequently of the other components.

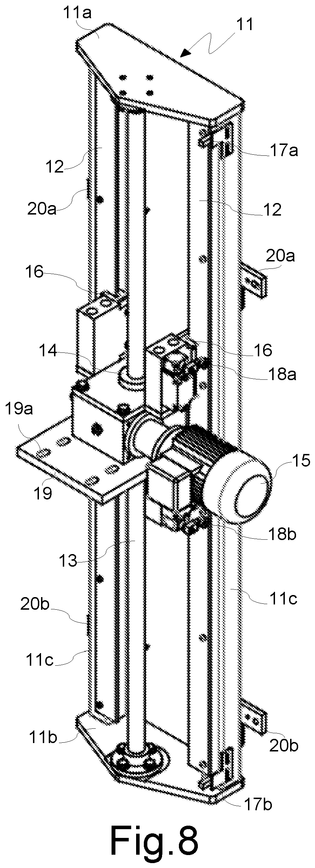

Turning now to Fig.8 there is illustrated an axial movement unit of the cage according to the present invention. This unit essentially consists of a supporting structure 11 formed by an upper plate 11a and a lower plate 11b connected by two lateral uprights 11c, each upright 11c carrying on the inside a flat guide 12. A stationary screw 13 is fixed centrally between plates 11a, 11b and is engaged by a rotating female screw 14 set in rotation by a jack 15 mounted on a carriage that slides on guides 12 by means of four C-shaped sliders 16.

Note that only the upper sliders are visible in the figure and in fact two sliders 16 might suffice, but the use of four sliders arranged in pairs above and below the carriage makes the movement smoother and more precise. Similarly, the use of two guides 12 is preferable but the unit could comprise a single guide 12 or even no guide 12 if the guiding function is performed by screw 13. It is also clear that the relative motion between screw 13 and the female screw 14 could also be achieved by rotating screw 13, in which case the jack 15 (or other equivalent actuator) would be fixed to structure 11 rather than to the carriage.

The axial adjustment stroke of the cage is defined by a pair of end stops 17a, 17b located respectively in the vicinity of plates 11a, 11b and adapted to actuate the corresponding switches 18a, 18b mounted respectively above and below the carriage and suitable to interrupt the operation of jack 15. Additionally, the carriage is provided with a horizontal plate 19 that protrudes outward and is provided with mounting holes 19a.

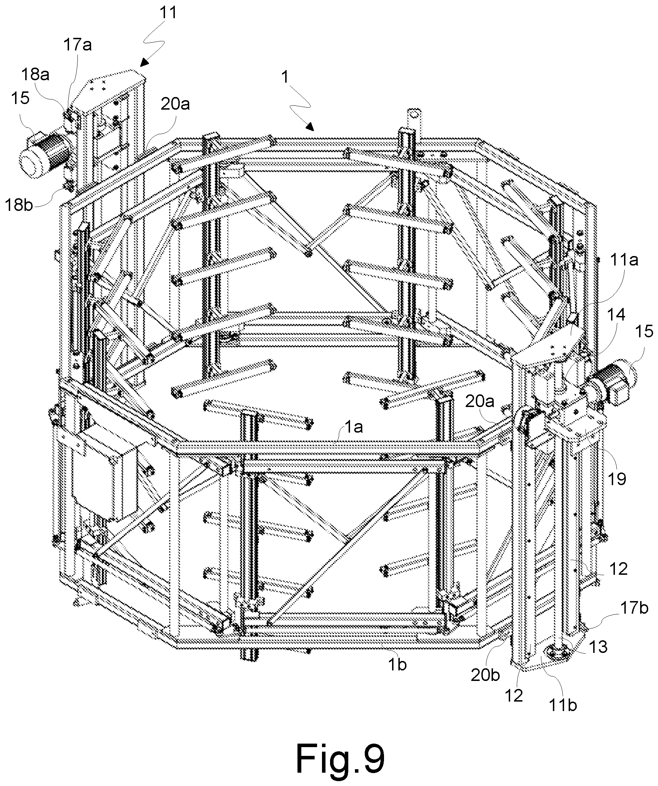

Referring also to Fig.9, there is seen that structure 11 of the axial movement unit is mounted on the supporting structure 1 of the cage by means of two pairs of upper 20a and lower 20b brackets which project laterally from uprights 11c and are integral therewith. More specifically, brackets 20a, 20b are vertically spaced apart as much as rings 1a, 1b so that they can be respectively fixed to rings 1a, 1b so as to exploit the rigidity of the supporting structure 1 of the cage.

The illustrated example shows a cage provided with two axial movement units mounted on structure 1 at opposite positions but this configuration should not be understood as limitative since the two units may also be in non-opposite positions and in certain cases a single unit might be sufficient, or vice versa there might be three or more movement units that are preferably but not necessarily equally spaced along the perimeter of structure 1.

The entire cage is mounted on the extrusion plant structure through plates 19 so that the rotation of the female screws 14 which are axially locked on said structure causes by reaction the axial displacement of screws 13, and therefore of the cage through brackets 20a and 20b, when jacks 15 are activated (in the case of two or more jacks 15 it is preferable that these are electronically synchronized to obtain a smooth and precise motion). Therefore the position illustrated in Fig.9 with the upper switch 18a in abutment on the upper end stop 17a corresponds to the lowest position for the cage, and the upward axial adjustment stroke is equal to the distance between the lower end stop 17b and the lower switch 18b.

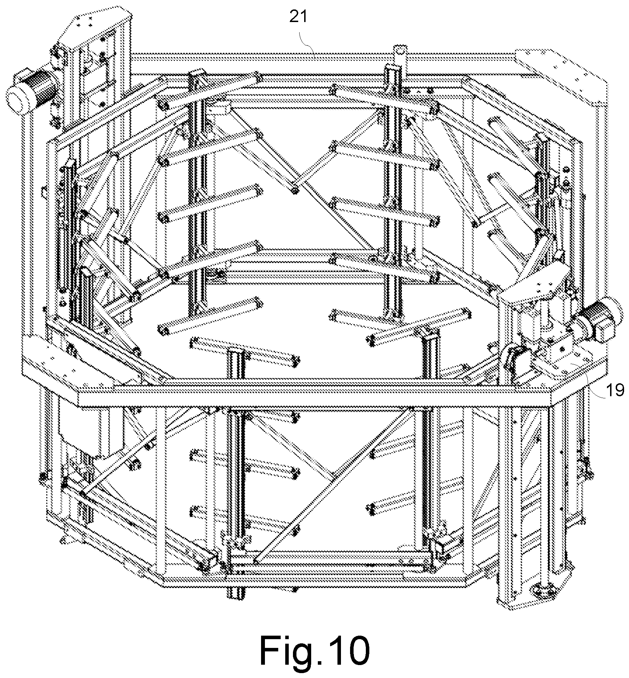

Finally, Fig.10 shows a variant of Fig.9 in which the mounting of the cage on the extrusion plant structure is not direct in that plates 19 are fixed to an auxiliary frame 21 which in turn is fixed to said structure. The presence of the optional frame 21 can be useful in case the cage has two or more axial movement units, since the cage can be preassembled at the factory with frame 21 as a guarantee that the cage arrives to be mounted on the plant with plates 19 properly aligned and levelled.

It is clear that the embodiments of the calibrator according to the invention described and illustrated above represent only examples susceptible of numerous other variations besides those already mentioned above. In particular, other solutions mechanically equivalent to those illustrated above are within the reach of a person skilled in the art such as, for example, the use of guides 12 and relevant sliders 16 of different shapes, a different number and/or shape of frames 2 and of the film guide elements, another mechanism of synchronization of the rotation of frames 2 and so on.

Moreover it is clear that the actuator means used for the radial and/or axial adjustment of the calibrator may be of any suitable type (pneumatic, hydraulic, etc.) or made otherwise (belts, racks, etc.).

## Claims

1. Calibration cage for the production of a blown film, said cage comprising a supporting structure (1) and a plurality of frames (2) rotatable in the horizontal plane which are pivoted along the perimeter of said supporting structure (1) at the vertices of a regular polygon, each of said frames (2) carrying a vertical rod (3) rotatable with respect thereto which in turn carries at least one element for guiding a blown film, wherein each of said vertical rods (3) is connected to at least one of the vertical rods (3) adjacent thereto through at least one connection element (8; 8') that is rigid in the horizontal plane yet has a length variable in said plane through the relative motion of at least two parts (8a, 8b; 8a', 8b') thereof, **characterized in that** said at least one connection element (8; 8') being pivoted between said adjacent vertical rods (3) through two horizontal pivots (9a, 9b), the axis of rotation of each of said horizontal pivots (9a, 9b) forming with a vertical radial plane comprising the axis of rotation of the respective vertical rod (3) an angle that is equal to half of the internal angle (α) of said regular polygon.

2. Calibration cage according to claim 1, **characterized in that** each vertical rod (3) is provided with a top bracket (3a) and a bottom bracket (3b) for the mounting on the respective frame (2), and **in that** at least one of said mounting brackets (3a, 3b) carries at least one of the horizontal pivots (9a, 9b) on which the at least one connection element (8; 8') is pivoted.

3. Calibration cage according to claim 1 or 2, **characterized in that** the at least one connection element (8) consists of an articulated rod made up of a first part (8a) and a second part (8b) connected through a horizontal pivot (8c), said parts (8a, 8b) being preferably identical.

4. Calibration cage according to claim 3, **characterized in that** the two parts (8a, 8b) of the articulated rod overlap in the radial direction at the horizontal pivot (8c) connecting them, and **in that** the pivot (9a, 9b) used for the fixing to the respective vertical rod (3) of the radially external part (8a, 8b) is longer by a length equal to the thickness (s) of the radially internal part (8a, 8b) with respect to the pivot (9a, 9b) used for the fixing to the respective vertical rod (3) of the radially internal part (8a, 8b), the same difference in length being present in respective spacers (10a, 10b) arranged between said parts (8a, 8b) and the respective vertical rods (3).

5. Calibration cage according to claim 3 or 4, **characterized in that** each vertical rod (3) is connected to both of the vertical rods (3) adjacent thereto through connection elements (8) pivoted at both ends in the proximity of the top of the respective frames (2), preferably at the same height.

6. Calibration cage according to claim 1 or 2, **characterized in that** the at least one connection element (8') consists of a telescopic rod made up of at least two parts (8a', 8b') introduced one inside the other.

7. Calibration cage according to claim 6, **characterized in that** each vertical rod (3) is connected to both of the vertical rods (3) adjacent thereto through connection elements (8') pivoted diagonally in the proximity of the top and bottom of the respective frames (2), preferably at the same height.

8. Calibration cage according to any of the preceding claims, **characterized in that** it further includes at least one axial movement unit comprising a supporting structure (11) provided with brackets (20a, 20b) for the mounting on the supporting structure (1) of the cage at the top and bottom thereof, said unit comprising a carriage provided with a horizontal mounting plate (19) projecting on the outside, said carriage being vertically mobile due to a relative rotary motion between a female screw (14) secured on the carriage and a vertical screw (13) engaging said female screw (14).

9. Calibration cage according to claim 8, **characterized in that** the axial movement unit comprises at least one guide (12) parallel to the vertical screw (13) and the carriage is provided with at least one slider (16) suitable to slidably engage said guide (12).

10. Calibration cage according to claim 8 or 9, **characterized in that** the female screw (14) is driven into rotation by a jack (15) mounted on the carriage.

11. Calibration cage according to any of claims 8 to 10, **characterized in that** it includes a plurality of axial movement units, said units being preferably arranged at regular intervals along the perimeter of the supporting structure (1) of the cage.

12. Calibration cage according to claim 11, **characterized in that** it further includes an auxiliary frame (21) suitable to connect the mounting plates (19) of the multiple axial movement units so as to guarantee that said plates (19) are correctly aligned and levelled.

## Patentansprüche

1. Kalibrierkorb zur Herstellung einer Blasfolie, wobei der besagte Korb eine tragende Struktur (1) aufweist sowie eine Mehrzahl von in einer horizontalen Ebene drehbaren Rahmen (2), welche entlang des Umfangs der besagten tragenden Struktur (1) an den Spitzen eines regulären Polygons drehbar gelagert sind, wobei jeder der besagten Rahmen (2) einen vertikalen Stab (3) trägt, welcher demgegenüber verdrehbar ist, und der seinerseits wenigstens ein Element zur Führung einer Blasfolie trägt, wobei jeder der besagten vertikalen Stäbe (3) mit wenigstens einem seiner benachbarten Stäbe (3) durch wenigstens ein Verbindungselement (8; 8') verbunden ist, das in der horizontalen Ebene starr ist, jedoch in der besagten Ebene eine variable Länge aufweist dank der relativen Beweglichkeit von wenigstens zweier seiner Teile (8a, 8b; 8a', 8b'), **dadurch gekennzeichnet, dass** das besagte, wenigstens eine Verbindungselement (8; 8') zwischen den benachbarten vertikalen Stäben (3) dank zweier horizontaler Drehpunkte (9a, 9b) schwenkbar ist, wobei die Drehachse jedes der besagten horizontalen Drehpunkte (9a, 9b) zusammen mit einer vertikalen Radialebene, welche die Drehachse des betreffenden vertikalen Stabs (3) umfasst, einen Winkel bildet, der gleich der Hälfte des Innenwinkels (α) des besagten, regulären Polygons ist.

2. Kalibrierkorb gemäß Anspruch 1, **dadurch gekennzeichnet, dass** jeder vertikale Stab (3) mit einer oberen Klammer (3a) und mit einer unteren Klammer (3b) versehen ist zur Montage an dem jeweiligen Rahmen (2), sowie dadurch, dass wenigstens eine der besagten Montageklammern (3a, 3b) wenigstens einen der horizontalen Drehpunkte (9a, 9b) stützt, an denen das wenigstens eine Verbindungselement (8; 8') schwenkbar gelagert ist.

3. Kalibrierkorb gemäß Anspruch 1 oder 2, **dadurch gekennzeichnet, dass** das wenigstens eine Verbindungselement (8) einen Gelenkstab umfasst, der aus einem ersten Teil (8a) und einem zweiten Teil (8b) besteht, welche durch ein horizontales Gelenk (8c) miteinander verbunden sind, wobei die besagten Teile (8a, 8b) vorzugsweise identisch sind.

4. Kalibrierkorb gemäß Anspruch 3, **dadurch gekennzeichnet, dass** sich die zwei Teile (8a, 8b) des Gelenkstabs an dem sie verbindenden horizontalen Gelenk (8c) in der radialen Richtung überlappen, sowie dadurch, dass der zur Befestigung an dem betreffenden vertikalen Stab (3) des radial äußeren Teils (8a, 8b) verwendete Drehzapfen (9a, 9b) um eine Länge gleich der Dicke (s) des radial inneren Teils (8a, 8b) länger ist gegenüber dem zur Befestigung an dem betreffenden vertikalen Stab (3) des radial inneren Teils (8a, 8b) verwendeten Drehzapfen (9a, 9b), wobei die selbe Längendifferenz auch an den Distanzstücken (10a, 10b) vorliegt, welche jeweils zwischen den besagten Teilen (8a, 8b) und den betreffenden vertikalen Stäben (3) angeordnet sind.

5. Kalibrierkorb gemäß Anspruch 3 oder 4, **dadurch gekennzeichnet, dass** jeder vertikale Stab (3) mit seinen beiden benachbarten vertikalen Stäben (3) über Verbindungselemente (8') verbunden ist, welche an beiden Enden in der Nähe der Oberseite der betreffenden Rahmen (2) schwenkbar gelagert sind, vorzugsweise jeweils auf der selben Höhe.

6. Kalibrierkorb gemäß Anspruch 1 oder 2, **dadurch gekennzeichnet, dass** das wenigstens eine Verbindungselement (8') einen Teleskopstab umfasst, der aus zwei Teilen (8a', 8b') besteht, welche ineinander eingeschoben sind.

7. Kalibrierkorb gemäß Anspruch 6, **dadurch gekennzeichnet, dass** jeder vertikale Stab (3) mit seinen beiden benachbarten vertikalen Stäben (3) über Verbindungselemente (8') verbunden ist, welche in der Nähe der Oberseite und der Unterseite der betreffenden Rahmen (2) diagonal schwenkbar gelagert sind, vorzugsweise jeweils auf der selben Höhe.

8. Kalibrierkorb gemäß einem der vorangehenden Ansprüche, **dadurch gekennzeichnet, dass** er ferner eine axiale Bewegungseinheit aufweist, umfassend eine im Bereich ihrer Ober- und Unterseite mit Laschen (20a, 20b) zur Montage an der tragenden Struktur (1) des Käfigs versehene, tragende Struktur (11), wobei die besagte Einheit einen Schlitten aufweist, der mit einer an der Außenseite vorspringenden horizontalen Montageplatte (19) versehen ist, wobei der besagte Schlitten vertikal beweglich ist infolge einer RelativDrehbewegung zwischen einer Mutter (14) an dem Schlitten und einer in die besagte Mutter (14) eingreifenden, vertikalen Schraube (13).

9. Kalibrierkorb gemäß Anspruch 8, **dadurch gekennzeichnet, dass** die axiale Bewegungseinheit wenigstens eine zu der vertikalen Schraube (13) parallele Führung (12) aufweist, und dass der Schlitten mit wenigstens einem Schieber (16) versehen ist, welcher geeignet ist, gleitend in die besagte Führung (12) einzugreifen.

10. Kalibrierkorb gemäß Anspruch 8 oder 9, **dadurch gekennzeichnet, dass** die Mutter (14) von einem an dem Schlitten montierten Antrieb (15) in Drehbewegung versetzt wird.

11. Kalibrierkorb gemäß einem der Ansprüche 8 bis 10, **dadurch gekennzeichnet, dass** er eine Mehrzahl von axialen Bewegungseinheiten umfasst, wobei die besagten Bewegungseinheiten vorzugsweise in regelmäßigen Intervallen entlang des Umfangs der tragenden Struktur (1) des Käfigs angeordnet sind.

12. Kalibrierkorb gemäß Anspruch 11, **dadurch gekennzeichnet, dass** er ferner einen Hilfsrahmen (21) umfasst, der geeignet ist, die Montageplatten (19) der mehreren axialen Bewegungseinheiten zu verbinden, um sicherzustellen, dass die besagten Platten (19) korrekt ausgerichtet und nivelliert sind.

## Revendications

1. Cage d'étalonnage pour la production d'un film soufflé, ladite cage comprenant une structure de support (1) et une pluralité de bâtis (2) pouvant tourner dans le plan horizontal qui sont pivotés le long du périmètre de ladite structure de support (1) aux sommets d'un polygone régulier, chacun desdits bâtis (2) portant une tige verticale (3) pouvant tourner par rapport à cette dernière, qui porte à son tour au moins un élément pour guider un film soufflé, dans laquelle :
chacune desdites tiges verticales (3) est raccordée à au moins l'une des tiges verticales (3) adjacente à cette dernière, par au moins un élément de raccordement (8 ; 8') qui est rigide dans le plan horizontal, ayant cependant une longueur variable dans ledit plan par le biais du mouvement relatif d'au moins deux de ses parties (8a, 8b ; 8a', 8b'), **caractérisée en ce que** :
ledit au moins un élément de raccordement (8 ; 8') étant pivoté entre lesdites tiges verticales (3) adjacentes par deux pivots horizontaux (9a, 9b), l'axe de rotation de chacun desdits pivots horizontaux (9a, 9b) formant avec un plan radial vertical comprenant l'axe de rotation de la tige verticale (3) respective, un angle qui est égal à la moitié de l'angle interne (α) dudit polygone régulier.

2. Cage d'étalonnage selon la revendication 1, **caractérisée en ce que** ladite tige verticale (3) est prévue avec une console supérieure (3a) et une console inférieure (3b) pour le montage sur le bâti (2) respectif, et **en ce qu'**au moins l'une desdites console de montage (3a, 3b) porte au moins l'un des pivots horizontaux (9a, 9b) sur lequel le au moins un élément de raccordement (8 ; 8') est pivoté.

3. Cage d'étalonnage selon la revendication 1 ou 2, **caractérisée en ce que** le au moins un élément de raccordement (8) se compose d'une tige articulée composée d'une première partie (8a) et d'une seconde partie (8b) raccordées par le biais d'un pivot horizontal (8c), lesdites parties (8a, 8b) étant de préférence identiques.

4. Cage d'étalonnage selon la revendication 3, **caractérisée en ce que** les deux parties (8a, 8b) de la tige articulée se chevauchent dans la direction radiale au niveau du pivot horizontal (8c) les raccordant, et **en ce que** le pivot (9a, 9b) utilisé pour la fixation à la tige verticale (3) respective de la partie radialement externe (9a, 9b) est plus longue selon une longueur égale à l'épaisseur (s) de la partie radialement interne (8a, 8b) par rapport au pivot (9a, 9b) utilisé pour la fixation à la tige verticale (3) respective de la partie radialement interne (8a, 8b), la même différence en longueur étant présente dans des dispositifs d'espacement (10a, 10b) respectifs agencés entre lesdites parties (8a, 8b) et les tiges verticales (3) respectives.

5. Cage d'étalonnage selon la revendication 3 ou 4, **caractérisée en ce que** chaque tige verticale (3) est raccordée aux deux tiges verticales (3) adjacentes à cette dernière par le biais des éléments de raccordement (8) pivotés au niveau des deux extrémités à proximité de la partie supérieure des bâtis (2) respectifs, de préférence à la même hauteur.

6. Cage d'étalonnage selon la revendication 1 ou 2, **caractérisée en ce que** le au moins un élément de raccordement (8') se compose d'une tige télescopique composée d'au moins deux parties (8a', 8b') introduites l'une à l'intérieur de l'autre.

7. Cage d'étalonnage selon la revendication 6, **caractérisée en ce que** chaque tige verticale (3) est raccordée aux deux tiges verticales (3) adjacentes à cette dernière par le biais des éléments de raccordement (8') pivotés en diagonale à proximité de la partie supérieure et du fond des bâtis (2) respectifs, de préférence à la même hauteur.

8. Cage d'étalonnage selon l'une quelconque des revendications précédentes, **caractérisée en ce qu'**elle comprend en outre au moins une unité de mouvement axial comprenant une structure de support (11) prévue avec des consoles (20a, 20b) pour le montage sur la structure de support (1) de la cage au niveau de sa partie supérieure et de son fond, ladite unité comprenant un chariot prévu avec une plaque de montage horizontale (19) faisant saillie à l'extérieur, ledit chariot étant verticalement mobile en raison d'un mouvement rotatif relatif entre une vis femelle (14) fixée sur le chariot et une vis verticale (13) se mettant en prise avec ladite vis femelle (14).

9. Cage d'étalonnage selon la revendication 8, **caractérisée en ce que** l'unité de mouvement axial comprend au moins un guide (12) parallèle à la vis verticale (13) et le chariot est prévu avec au moins une glissière (16) appropriée pour mettre en prise, de manière coulissante, ledit guide (12).

10. Cage d'étalonnage selon la revendication 8 ou 9, **caractérisée en ce que** la vis femelle (14) est entraînée en rotation par un vérin (15) monté sur le chariot.

11. Cage d'étalonnage selon l'une quelconque des revendications 8 à 10, **caractérisée en ce qu'**elle comprend une pluralité d'unités de mouvement axial, lesdites unités étant de préférence agencées à intervalles réguliers le long du périmètre de la structure de support (1) de la cage.

12. Cage d'étalonnage selon la revendication 11, **caractérisée en ce qu'**elle comprend en outre un bâti auxiliaire (21) approprié pour raccorder les plaques de montage (19) de la pluralité d'unités de mouvement axial afin de garantir que lesdites plaques (19) sont correctement alignées et de niveau.
